(19) Europäisches Patentamt
European Patent Office
Office européen des brevets

(11) **EP 4 382 386 A1**

(12) **EUROPEAN PATENT APPLICATION**

(43) Date of publication:
**12.06.2024 Bulletin 2024/24**

(21) Application number: **22306789.3**

(22) Date of filing: **05.12.2022**

(51) International Patent Classification (IPC):
**B60W 40/076** (2012.01)    **B60W 40/13** (2012.01)
**B60T 8/172** (2006.01)

(52) Cooperative Patent Classification (CPC):
**B60T 8/172; B60W 40/076; B60W 40/13;**
B60T 2250/02

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **TOYOTA JIDOSHA KABUSHIKI
KAISHA
Aichi-Ken 471-8571 (JP)**

(72) Inventors:
- **POMPINI, Nicola**
  **1140 BRUSSELS (BE)**
- **BOUILLY, Julien**
  **1140 BRUSSELS (BE)**
- **MOCHIHARA, Takahiro**
  **TOYOTA-SHI, AICHI-KEN, 471-8571 (JP)**

(74) Representative: **Cabinet Beau de Loménie
158, rue de l'Université
75340 Paris Cedex 07 (FR)**

(54) **METHOD FOR ESTIMATING MASS AND ROAD LOAD PARAMETERS OF A VEHICLE**

(57)    A computer-implemented method for estimating mass and road load parameters of a vehicle comprises providing a dynamical model of the vehicle. State variables of the model comprise a speed of the vehicle and mass and road load parameters of the vehicle, one of the state variables having a dynamical evolution depending on input variables. Input variables at a previous time are measured based on the state variables. Predicted state variables and predicted output variables at a future predetermined time are calculated, the predicted output variables comprising a speed of the vehicle and an energy consumption of the vehicle. A predicted covariance of the state variables is calculated based on the predicted variables. Actual output variables comprising an actual speed of the vehicle and an actual energy consumption of the vehicle are calculated. A predicted output error between the predicted output variables and the actual output variables is calculated. The state variables are corrected based on the predicted output error and the predicted covariance.

EP 4 382 386 A1

```
                    Start
                      |
        Set initial mass and road load        S1
        parameters to initial values
                      |
        Set mass and road load energy          S2
               terms to zero
                      |
          Measure input                        S3
            variables  <─────────────────────────────┐
                      |                               |
        Calculate predicted output    S4              |
        variables and predicted state        Correct the state variables based on   S7
               variables               a calculated output error between
                      |                the predicted output variables and
        Calculate predicted covariance  S5      the actual output variables
            of state variables                        |
                      |                               |
          Determine actual                         Is the      S8
           output variables      S6                  trip    No
                                                    over ?──────┘
                                                     |
                                                    Yes
                                                     |
                                                    End
```

**FIG. 2**

Processed by Luminess, 75001 PARIS (FR)

**Description**

1. Field of the Invention

The invention relates to the field of automotive industry. In particular, the invention relates to a computer-implemented method for estimating mass and road load parameters of a vehicle.

2. Description of Related Art

The estimation of vehicle energy consumption is a key challenge in conventional powertrains as well as in electrified powertrains such as Hybrid Electric vehicles (HEV), Plug-in-hybrid vehicles (PHEV), Battery electric vehicles (BEV) or Fuel cell electric vehicle (FCEV).
The knowledge of a vehicle mass and of road load during a trip, possibly combined with the knowledge of the profile of the trip slope, may improve the ability of powertrains logic to account for vehicle drivability behavior (e.g. for Cruise control) or to correctly estimate the driving range of the vehicle in order to assist the driver as early as possible in planning his trip and determining the most adequate location to recharge the battery of the vehicle.
It is known that estimation of vehicle mass and road load can be achieved through different means. For example, it can be achieved by using rule-based logic and state-flow based decision, by using physical or surrogate models, by using mixed model and statistic inference based approaches (e.g. Kalman filter, Bayesian inference), or by using Machine Learning and system identification methods.
Methods based on Extended Kalman filter (EKF) are of particular interest as they combine knowledge from the physical behavior of the vehicle to experimental data gathered by sensor during a vehicle trip. In particular, EKF-based methods are able to rapidly estimate the mass and the road load and can be embedded on existing control logic hardware on the vehicle.
Generally, an implementation of EKF for estimating mass and road load is based on predicting a vehicle speed by means of a dynamical model, and then comparing the prediction to a measured speed of the vehicle. Based on the error between predicted and measured speed, the unknown mass and road load can be updated and corrected in the dynamical model.
Such an EKF-based method yields an approximation of the mass and road load that can be applied to the predictive simulation of short-term vehicle longitudinal dynamics.
However, EKF-based methods provide estimates of the mass and road load that cannot be efficiently used to predict the behavior of a vehicle in a mid-term or long-term horizon. Most importantly, the estimates cannot be used to accurately predict future energy consumption of a vehicle.
The present disclosure relates to a method for estimating mass and road load of a vehicle solving some of the problems of the existing art.
The following references disclose various methods relating to estimation of vehicle parameters using Kalman filtering.

[REF 1] LINGMAN, Peter & SCHMIDTBAUER, Bengt. Road slope and vehicle mass estimation using Kalman filtering. Vehicle System Dynamics, 2002, vol. 37, p. 12-23.
[REF 2] EL GAOUTI, Youssef, COLIN, Guillaume, THIAM, B., et al. Online vehicle aerodynamic drag observer with Kalman filters. IFAC-PapersOnLine, 2021, vol. 54, no 2, p. 51-56.
[REF 3] REINA, Giulio, PAIANO, Matilde, & BLANCO-CLARACO, Jose-Luis. Vehicle parameter estimation using a model-based estimator. Mechanical Systems and Signal Processing, 2017, vol. 87, p. 227-241.
[REF 4] WINSTEAD, Vincent & KOLMANOVSKY, Ilya V. Estimation of road grade and vehicle mass via model predictive control. In : Proceedings of 2005 IEEE Conference on Control Applications, 2005. CCA 2005. IEEE, 2005. p. 1588-1593.

SUMMARY OF THE INVENTION

According to aspects of the present disclosure, a computer-implemented method for estimating mass and/or road load parameters of a vehicle during a vehicle trip based on an iterative estimator is provided. The method comprises steps of:

- providing a dynamical model of the vehicle, wherein a dynamical state of the vehicle is characterized by state variables comprising at least a speed of the vehicle and mass and road load parameters of the vehicle, at least one of the state variables having a dynamical evolution depending on input variables;
- measuring the input variables;

- based on the state variables and the measured input variables at a previous time, calculating predicted state variables and predicted output variables at a future predetermined time, the predicted output variables comprising at least a speed of the vehicle and an energy consumption of the vehicle;
- based on the state variables and the measured input variables at the previous time, calculating a predicted covariance of the state variables at the future predetermined time;
- determining actual output variables corresponding to the predicted output variables, the actual output variables comprising at least an actual speed of the vehicle and an actual energy consumption of the vehicle;
- calculating a predicted output error between the predicted output variables and the actual output variables; and, based on the predicted output error and the predicted covariance of the state variables, correcting the state variables.

For the sake of conciseness, the mass and road load parameters are referred to hereinafter as MRL parameters. Further, such method is referred to hereinafter as the MRL estimator method.

In the present description, a vehicle trip may refer to a journey of a vehicle from a first location to a second location or, equivalently, to a vehicle round trip between two locations.

In the present description, the MRL parameters of a vehicle comprise a mass parameter and road load parameters, such mass parameter and road load parameters being related to forces exerted on the vehicle that enter a road load equation of the vehicle.

In the present description, the mass parameter is a mass term entering an equation describing a road grade force exerted by the road on wheels of the vehicle.

In the present description, road load parameters of a vehicle refer to a set of parameters comprising an aerodynamic drag coefficient (drag coefficient) of the vehicle and a rolling resistance coefficient (roll coefficient) of the vehicle. The drag coefficient enters an equation describing the aerodynamic drag force of the air surrounding the vehicle on the vehicle. The roll coefficient enters an equation describing the rolling resistance force resisting the motion of the vehicle.

Therefore, in the present description, the mass and road load parameters may comprise a mass parameter, a drag coefficient, and a roll coefficient, that are related to a road grade force, an aerodynamic drag force, and a rolling resistance force, respectively.

In an EKF-based method for estimating MRL parameters of the prior art, an EKF estimator is used to estimate iteratively state variables comprising the MRL parameters. At each iteration step, a prediction of the state variables is made based on various state variables at a previous time and the prediction is then compared to actual data measured on the vehicle. A predicted output error resulting from a difference between the predicted state variables and the actual data is used, as a feedback signal, to correct the prediction in view of subsequent predictions. The correction of the state variables is based on generic EKF equations that use statistical covariance of the predicted state variables and is known to the skilled person, see for example [REF2].

The inventors observed that a limitation of EKF-based methods for estimating MRL parameters of the prior art originates from the fact that a speed of the vehicle is chosen as a single output variable to compute the error that is used as a feedback signal to correct the state variables of the EKF estimator. In view of such limitation, the proposed MRL estimator method proposes to compute an error based on both a speed of a vehicle and an energy consumption of the vehicle in order to correct state variables of an EKF estimator. This provides an improved accuracy of prediction of mass and road load parameters.

The inventors observed that including energy consumption as a feedback signal to calculate the predicted output error helps narrowing the correction to more consistent values of mass and road load parameters, that are closer to physical values and more valuable to predict the behavior of the vehicle for future energy consumption.

A reason for the improved accuracy is as follows. It is generally possible to find different combinations of mass and road load parameters that provide the same short-term impact on vehicle acceleration and vehicle speed. Therefore, EKF-based methods of the prior art that rely only on measured vehicle speed to correct predicted mass and road load parameters can infer incorrect mass and road load parameters. For example, when driving at high speed only, impact of rolling resistance is much smaller than that of aerodynamic drag, therefore, the EKF-based methods of the prior art can lead to incorrect estimation of the roll coefficient. On the contrary, with the MRL estimator method according to the present disclosure, due to the fact that information about past energy consumption is considered when calculating the predicted output error, therefore, an incorrect correction of mass and road load parameters at high speed is less likely as such incorrect correction would have an impact on the entire energy consumed since the start of the vehicle trip, including previous section driven at low speed where the contribution of rolling resistance to the energy consumption was much more significant.

According to embodiments, the input variables comprise an angular velocity of at least one wheel of the vehicle and a traction torque of the at least one wheel, and wherein the actual energy consumption of the vehicle is calculated based on previous measurements of such angular velocity and such traction torque. Such previous measurements may be measurements obtained throughout the vehicle trip since the start of the trip.

Advantageously, such calculation provides a virtual measure of the energy consumption of the vehicle without requiring an actual energy sensor. Therefore, the method acts as if the energy is measured with a virtual energy sensor. In particular, it is possible to evaluate the energy consumption since the start of the vehicle trip using previously measured values without requiring direct energy measurements that would be difficult to achieve.

According to embodiments, the state variables further comprise mass and road load energy terms representative of relative energy contributions of the forces related to the mass and road load parameters to energy consumption of the vehicle.

This allows for assessing the most likely combination of MRL parameters at a predetermined time from the knowledge of the energy that has been consumed at previous times since the start of the vehicle trip, i.e., based on previous predictions of energy consumption.

According to embodiments, the mass and road load energy terms are calculated, at each iteration, based on at least one input variable measured since the start of the trip and a time elapsed since the start of the trip.

Advantageously, such calculation allows for taking into account the contributions of the mass and road load parameters to vehicle energy consumption throughout the entire trip duration since the start of the trip, and not only from the latest iteration of the MRL estimator method.

According to embodiments, the mass and road load energy terms comprise a rolling resistance energy term representative of a rolling resistance exerted by the road on the vehicle, and wherein a predicted rolling resistance energy term is calculated based on the speed of the vehicle measured at previous times and a time elapsed since the start of the trip. In such embodiments, the predicted rolling resistance energy is calculated from parameters of the vehicle that can be measured such as the speed, which improves the accuracy of the prediction. In embodiments, the speed of the vehicle is an actual speed of the vehicle measured at the previous times.

According to embodiments, the mass and road load energy terms comprise a drag energy term representative of an aerodynamic drag force exerted by surroundings of the vehicle on the vehicle, and wherein a predicted drag energy term is calculated based on a cubic speed of the vehicle measured at previous times and a time elapsed since the start of the trip. In such embodiments, the predicted drag energy is calculated from parameters of the vehicle that can be measured such as the speed, which improves the accuracy of the prediction. In embodiments, the speed of the vehicle is an actual speed of the vehicle measured at the previous times.

According to embodiments, the mass and road load energy terms comprise a mass energy term representative of a road grade force exerted by a gravitational field on the vehicle, and wherein a predicted mass energy term is calculated based on a square speed of the vehicle and a road slope angle measured at previous times and a time elapsed since the start of the trip. In such embodiments, the predicted mass energy is calculated from parameters of the vehicle that can be measured such as the speed and the road slope angle, which improves the accuracy of the prediction. In embodiments, the speed of the vehicle is an actual speed of the vehicle measured at the previous times.

According to embodiments, the predicted energy consumption of the vehicle is calculated as a linear combination of predicted mass and road load energy terms weighted by corresponding predicted mass and road load parameters.

According to embodiments, the method further comprises a step of setting initial mass and road load parameters to predetermined initial values, for example production values.

According to embodiments, the method further comprises a step of, before proceeding to the step of measuring input variables, setting mass and road load energy terms to predetermined initial values, for example equal to zero.

According to embodiments, the method further comprises a step of determining if a trip of the vehicle is ongoing and, if it is determined that a trip of the vehicle is ongoing, proceeding to a further iteration of the method.

Therefore, at each iteration, the state variables may be corrected using data from actual measurements of parameters of the vehicle. In particular, at each iteration, the predicted contributions of mass and road load parameters to energy consumption since the start of the trip may be compared to actual energy consumption since the start of the trip that is calculated from measured input variables. The MRL estimator method according to the present disclosure thereby provides an accurate estimation of the mass and road load parameters that improves over the existing art.

According to embodiments, the method further comprises a step of using the state variables to control the vehicle, wherein controlling the vehicle comprises adjusting actuators of the vehicle to minimize fuel and/or energy consumption in view of a predetermined trip.

According to embodiments, the method further comprises a step of using the state variables to transmit a warning message to a user of the vehicle, the warning message comprising, for example, information on required maintenance and/or an over-loaded situation of the vehicle. The user of the vehicle may be, for example, the driver of the vehicle or a non-driving passenger of the vehicle, or a person remotely monitoring the behavior of the vehicle.

According to embodiments, the method further comprises a step of using the state variables to estimate a remaining driving range of the vehicle and transmit information regarding the remaining driving range to a user of the vehicle.

According to embodiments, the predicted state variables are calculated based on an equation of longitudinal dynamics of the vehicle.

According to embodiments, the input variables comprise a torque of a wheel of the vehicle and/or road slope angle. Advantageously, such input variables can be precisely measured with sensors that are generally available.

According to embodiments, the road slope angle is derived from a measurement of a road grade percentage based on an accelerometer sensor and/or a Global Navigation Satellite System.

The present disclosure is further related to a computer program including instructions for executing the steps of the above method for estimating mass and road load parameters when said program is executed by a computer. This program can use any programming language and take the form of source code, object code or a code intermediate between source code and object code, such as a partially compiled form, or any other desirable form.

The present disclosure is further related to a recording medium readable by a computer and having recorded thereon a computer program including instructions for executing the steps of the above described method. The recording medium can be any entity or device capable of storing the program. For example, the medium can include storage means such as a ROM, for example a CD ROM or a microelectronic circuit ROM, or magnetic storage means, for example a diskette (floppy disk) or a hard disk.

Alternatively, the recording medium can be an integrated circuit in which the program is incorporated, the circuit being adapted to execute the method in question or to be used in its execution.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a diagram representing aspects of a method to estimate mass and road load parameters according to the present disclosure;
FIG. 2 is a block diagram of a method to estimate mass and road load parameters of a vehicle according to embodiments;
FIGS. 3A-3B are charts illustrating advantages of the method according to the present disclosure over other methods.

DETAILED DESCRIPTION OF EMBODIMENTS

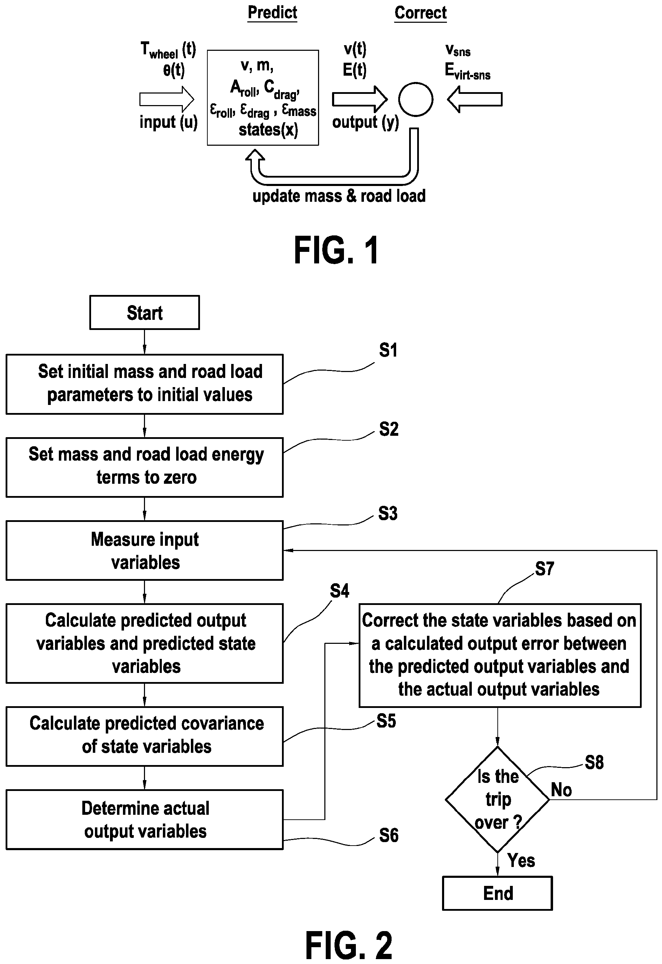

Methods and systems for estimating mass and road load (MRL) parameters of a vehicle, which constitute exemplary embodiments of the present disclosure, are now going to be presented in relation with FIGS.1-3.

Although the present description mainly describes a computer-implemented method for estimating the MRL parameters of a vehicle, it is contemplated that the present disclosure relates, at least equivalently, to a system configured to implement steps of such methods. Such system may be, for example, an electronic control unit (ECU) of a vehicle.

Such methods have been developed in order to provide accurate estimation of the mass and road load parameters of a vehicle during a vehicle trip. In particular, such estimation may be used to estimate the driving range of a vehicle and/or to assist a driver of the vehicle in planning his trip.

The methods according to the present disclosure are based on an augmented Kalman filtering to estimate mass and road load parameters of a vehicle. In the present description, augmented Kalman filtering refers to a modified implementation of an extended Kalman filtering applied to estimation of mass and road load parameters wherein energy consumption is predicted and compared with an actual value of energy consumption in order to calculate an error signal that is used, as a feedback signal, to update the Kalman estimator, i.e. state variables describing a state of the vehicle.

Further, in embodiments, the state variables that are updated at each iteration of the Kalman estimator comprise MRL relative energy contributions of the MRL forces to the overall energy consumption of the vehicle.

In reference to FIG. 1, the augmented Kalman filtering process aims at iteratively estimating state variables, $x$, comprising MRL parameters ($m$, $A_{roll}$, $C_{drag}$), based on input variables, $u$, that can be measured, for example, by sensors of a vehicle.

In embodiments, MRL parameters may comprise a roll coefficient, $A_{roll}$, expressed in Newton (N), and a drag coefficient, $C_{drag}$, expressed in $N.s^2/m^2$.

At each iteration, the process comprises two phases: a prediction phase and a correction phase. During the prediction phase, input variables are measured and state variables are estimated from the measured input variables. Further, predicted output variables, y, are calculated from the state variables. The estimation of the state variables may be made, for example, from longitudinal dynamics of the vehicle (see Equation 1 hereafter). Further, a covariance matrix describing the covariance between the state variables is also predicted using generic extended Kalman filtering prediction equations; see for example [REF2].

During the correction phase, actual output variables are measured by sensors of the vehicle and compared with the predicted output variables. Further, based on an error between the predicted output variables and the actual output variables, the state variables are updated using generic extended Kalman filtering update equations using the predicted covariance matrix of the prediction phase, see for example [REF2]. Such update of the state variables through extended Kalman filtering equations is a correction of the state variables minimizing an uncertainty of the prediction under an assumption of linear additive Gaussian white noise. The error between the predicted output variables and the actual output variables can therefore be considered as a feedback signal used to correct the state variables.

In embodiments, actual output variables may also be measured from "virtual" sensors, which means that they are not measured directly, but derived from measurements of sensors detecting other quantities.

In reference to FIG. 1, the input variables, which generally depend on time, comprise a wheel torque $T_{wheel}$, expressed in Newtons, and a road slope angle, $\theta$, expressed in radians. The input variables may be measured and/or determined based on measured parameters.

In embodiments, the input variables may also comprise a measured speed of the vehicle or a measured angular velocity of a wheel of the vehicle. Such measured speed or angular velocity can be used, for example, to calculate the overall energy consumption of the vehicle, see Equation 2 discussed hereafter.

In reference to FIG. 1, the state variables, which generally depend on time, comprise the speed of the vehicle, $v$, and the MRL parameters, i.e. the mass of the vehicle, $m$, the roll coefficient, $A_{roll}$, and the drag coefficient, $C_{drag}$. Further, in order to account for the overall impact of MRL forces on total energy consumption of the vehicle, the state variables may also comprise additional terms representative of relative energy contributions of the MRL forces to the energy consumption of the vehicle. The additional terms are referred to as MRL energy terms in the present description. Such MRL energy terms are multiplying factors and are not homogeneous to energies. The MRL energy terms may comprise, for example, the roll energy term, $\varepsilon_{roll}$, the drag energy term, $\varepsilon_{drag}$, and the mass energy term, $\varepsilon_{mass}$. Such terms may be expressed in Joule per Newton (J/N), in J.m²/(N.s²), and in Joule per kilogram (J/kg), respectively.

The expression of the MRL energy terms may, for example, be derived from an equation of energy consumption of a vehicle at a wheel of radius $R_{dyn}$ as follows.

$$\frac{T_{wheel}}{R_{dyn}} - F_{rld} - F_{grd} = m_{tot}\frac{dv}{dt} \qquad \text{(Equation 1)}$$

wherein $T_{wheel}$ is a traction torque of the wheel, $F_{rld}$ is a road load force exerted on the wheel, $F_{grd}$ is a road grade force exerted on the wheel.

The inventors observed that an energy consumption of the vehicle may advantageously be estimated as follows.

$$E_{veh} = \int\left(\frac{T_{wheel}}{R_{dyn}}.v_{sns}\right)dt \qquad \text{(Equation 2)}$$

An advantage of such formulation is that the wheel torque and the speed of the vehicle can be measured at any time during a vehicle trip, and that the wheel radius is generally known, therefore it is possible to precisely calculate the energy consumption from measured parameters at any time during a vehicle trip.

Advantageously, in Equation 2, the speed is the actual speed, $v_{sns}$, of the vehicle, as measured for example by a sensor, and not the predicted speed among the state variables. This allows for a particularly accurate estimation of energy consumption throughout the entire vehicle trip, in particular since the start of the trip.

The road load force and the road grade force may generally be expressed as follows in terms of the roll coefficient, $A_{roll}$, the drag coefficient, $C_{drag}$, and the speed of the vehicle, $v$, respectively.

$$F_{rld} = A_{roll} + C_{drag}.(v)^2 \qquad \text{(Equation 3)}$$

and

$$F_{grd} = m.g.\sin(\theta) \qquad \text{(Equation 4)}$$

wherein g is the gravitational acceleration constant and $\theta$ is the road slope angle, which can be expressed in terms of the road grade, G, expressed in percentage, as follows.

$$\theta = \tan^{-1}(G/100) \qquad \text{(Equation 5)}$$

The road grade, G, is the percentage of inclination of a road, i.e. a percentage ratio of rise to run on a road. Equation 3 is generally known as a road load equation.

Therefore, in view of equations 1-4, the inventors observed that the (overall) energy consumption of the vehicle, $E$, may be expressed as a linear combination of MRL parameters and integral terms related to previous measurements:

$$E = \int \left( F_{rld} + F_{grd} + m.\frac{dv_{sns}}{dt} \right).v_{sns}\ dt$$

$$= \int \left( A_{roll} + C_{drag}.(v_{sns})^2 + m.g.\sin(\theta) + m.\frac{dv_{sns}}{dt} \right).v_{sns}\ dt$$

$$= A_{roll}.\int v_{sns}\ dt + C_{drag}.\int (v_{sns})^3\ dt + m.\int (\frac{dv_{sns}}{dt} + g.\sin(\theta)).v_{sns}\ dt$$

$$= A_{roll}.\int v_{sns}\ dt + C_{drag}.\int (v_{sns})^3\ dt + m \left( \frac{1}{2}(v_{sns})^2 + \int g.\sin(\theta).v_{sns}\ dt \right)$$

$$(Equation\ 6)$$

where the last line of Equation 6 may be obtained after integration by parts of the last term in order to avoid computation of the derivative of the measured speed, $v_{sns}$, which can introduce noise in the calculation.

The inventors observed that the energy consumption of the vehicle can therefore be advantageously expressed as a linear combination of relative energy contributions of the MRL parameters to the overall energy consumption, weighted by the MRL parameters, as follows.

$$E = A_{roll}.\varepsilon_{roll} + C_{drag}.\varepsilon_{drag} + m.\varepsilon_{mass} \qquad (Equation\ 7)$$

wherein the MRL relative energy contributions (i.e. MRL energy terms) are:

$$\varepsilon_{roll} = \int_0^\tau v_{sns}\ dt \qquad (Equation\ 8)$$

$$\varepsilon_{drag} = \int_0^\tau (v_{sns})^3\ dt \qquad (Equation\ 9)$$

$$\varepsilon_{mass} = \frac{1}{2}(v_{sns})^2 + \int_0^\tau g.\sin(\theta).v_{sns}\ dt \qquad (Equation\ 10)$$

The decomposition of the energy consumption of the vehicle in terms of MRL energy terms provides a way to account independently for the impact of the MRL parameters on the energy consumption. Further, In Equations 8-10, the integrals are calculated over the time, $\tau$, elapsed since the start of the trip. This allows for accounting for the contributions of MRL parameters to vehicle energy consumption throughout the entire trip duration since the start of the trip, and not only from the latest iteration of the MRL estimator method according to the present disclosure.

In embodiments, the MRL energy terms may be calculated based on the speed of the vehicle, and/or the acceleration of the vehicle, and/or the road slope.

It is contemplated that the methods and systems to estimate the mass and road load parameters according to the present disclosure provide accurate estimation of future vehicle energy consumption. To this end, the MRL energy terms may be included in the state variables of the extended Kalman filtering process. As the MRL energy terms account for the past energy consumption due to each of the MRL parameters, the MRL parameters may be corrected based on knowledge of the actual energy consumption of the vehicle and of the actual speed of the vehicle.

In reference to FIG. 1, the predicted output variables, y, may be calculated from the state variables, x. In particular, the predicted output speed is known as the speed is already in the state variables (i.e. the speed in the output vector, y, is the same speed that the speed in the state vector, x). Further, the predicted output overall energy consumption of the vehicle, E, may be calculated as a linear combination of the MRL energy terms weighed by respective MRL parameters (see Equation 7).

In reference to FIG. 1, the actual variables comprise the actual speed of the vehicle, $v_{sns}$ , and the actual energy consumption of the vehicle, $E_{virt\text{-}sns}$ . The actual speed of the vehicle may be measured from a vehicle speed sensor. Further, the inventors observed that the actual overall energy consumption of the vehicle may advantageously be calculated from other measured parameters of the vehicle (see Equation 2), as if measured by a "virtual sensor".

The actual speed of the vehicle, $v_{sns}$, may be calculated in terms of a measured angular velocity of a wheel, $\omega_{wheel}$ , and a dynamic radius of the same wheel, $R_{dyn}$, as follows.

$$v = \omega_{wheel}.R_{dyn} \qquad \text{(Equation 11)}$$

In embodiments, in reference to FIG. 1, the state variables of the MRL estimator method comprise the MRL energy terms. Each of these terms may therefore be updated at each iteration step by using values measured directly with sensors and/or derived from such measurements.

During the prediction phase and correction phase, generic computation steps of Kaman filtering processes may be used. As the vehicle dynamics is non-linear, an Extended Kalman Filtering formulation may be used, approximating a covariance matrix of the non-linear system with a Jacobian of the function characterizing the update of the state variables and the function characterizing the update of the output variables. Advantageously, the algorithms used in the Extended Kalman Filtering formulation are iterative and therefore, generally only require keeping track of the input variables, the state variables estimates and the covariance matrix allowing for a real-time implementation of the prediction and correction phases. See for example [REF2] for reference on the equations used in an implementation of a generic Extended Kalman filtering process.

In embodiments, the state variables at an iteration step, *k*, may be expressed as a state space vector, $x_k$ , defined as follows.

$$x_k = \begin{bmatrix} v_k \\ m_k \\ A_{roll,k} \\ C_{drag,k} \\ \varepsilon_{roll,k} \\ \varepsilon_{drag,k} \\ \varepsilon_{mass,k} \end{bmatrix} \qquad \text{(Equation 12)}$$

In embodiments, the input variables at an iteration step, *k*, may be expressed as an input vector, $u_k$ , defined as follows.

$$u_k = \begin{bmatrix} T_{wheel,k} \\ \theta_k \end{bmatrix} \qquad \text{(Equation 13)}$$

In embodiments, the output variables at an iteration step, *k*, may be expressed as an output vector, $y_k$ , defined as follows.

$$y_k = \begin{bmatrix} v_k \\ E_k \end{bmatrix} \qquad \text{(Equation 14)}$$

In embodiments, during the prediction phase, a predicted output vector at an iteration step, *k*, may be calculated from the state space vector at the iteration step, *k*, as follows. The vehicle speed may be estimated from longitudinal dynamics of the vehicle (Equation 1) and the energy consumption of the vehicle may be estimated from a linear combination of MRL energy terms (Equation 7).

$$y_k = h(x_k) = \begin{bmatrix} v_k \\ A_{roll,k}.\varepsilon_{roll,k} + C_{drag,k}.\varepsilon_{drag,k} + m_k.\varepsilon_{mass,k} \end{bmatrix} \qquad \text{(Equation 15)}$$

In particular, the methods and systems according to the present description make it possible to predict the overall energy consumption of the vehicle from knowledge of the MRL energy terms, the MRL parameters, the vehicle speed and the road slope angle, see Equations 7-10 and Equation 15.

Once the output vector is obtained, subsequent computation steps typical of an EKF may be performed, such as a calculation of a predicted covariance matrix of the state variables.

Subsequently, during a correction phase, the estimated output variables are compared with actual values of parameters of the vehicle corresponding to the state variables. Such actual values may be measured or derived from sensors on the vehicle.

The state variables are then updated based on errors between the predicted output variables and the actual values of the output variables. In particular, the predicted speed of the vehicle may by compared with the speed measured with a speed sensor on the vehicle, and the predicted overall energy consumption may be compared to a value of the energy consumption derived from values of the vehicle speed the traction torque of a wheel, and the radius of such wheel integrated over previous time.

In embodiments, state variables at an iteration step *k+1*, may be calculated from state variables at a previous iteration step, k, and from input variables at the same previous iteration step by the following as follows.

$$x_{k+1} = f(x_k, u_k)$$

$$= \begin{bmatrix} v_k + \dfrac{\dfrac{T_{wheel}}{R_{dyn}} - A_{roll,k} - C_{drag,k}.v_k^2 - m_k.g.\sin(\theta_k)}{m_k}.\Delta t \\ m_k \\ A_{roll,k} \\ C_{drag,k} \\ \varepsilon_{roll,k} + v_k.\Delta t \\ \varepsilon_{drag,k} + v_k^3.\Delta t \\ \varepsilon_{mass,k} + \left[ \dfrac{\dfrac{T_{wheel}}{R_{dyn}} - A_{roll,k} - C_{drag,k}.v_k^2 - m_k.g.\sin(\theta_k)}{m_k} + g.\sin(\theta_k) \right] v_k.\Delta t \end{bmatrix}$$

$$\text{(Equation 16)}$$

wherein the state variables at an iteration step, k, are written as a state space vector, $x_k$, and the input variables at an iteration step, k, are written as an input vector, $u_k$. Further two subsequent iteration steps *k* and *k+1* are separated by a predetermined time interval, *Δt*.

In reference to FIG. 2, according to embodiments, the method according to the present disclosure may comprise several processing steps (S1, S2, S3, S4, S5, S6, S7, S8). Such steps are performed after the method for estimating MRL parameters is started, for example, when starting a vehicle trip.

When starting a vehicle tip, there may be no available previous data or not enough data to correctly estimate MRL parameters.

Consequently, in an optional first step S1, the MRL parameters ($m$, $A_{roll}$, $C_{drag}$) are initialized to initial values on which the further steps are based. Such initial values may comprise, for example, nominal specifications or production values of the vehicle considering at least one person in the vehicle, for example a driver.

Further, when starting a vehicle trip, there is generally not enough data available to calculate initial MRL energy terms ($\varepsilon_{mass}$, $\varepsilon_{roll}$, $\varepsilon_{drag}$). Therefore, in step S2, MRL energy terms are initialized to initial values. As an example, the initial values are chosen equal to zero.

In step S3, input variables are measured and/or derived from measurements of parameters of the vehicle. As an example, input variables may comprise wheel torque $T_{wheel}$ and road slope angle θ.

In embodiments, the wheel torque, $T_{wheel}$ may be measured by a control unit of a vehicle, for example an electrical control unit (ECU) of a vehicle. The way of measuring the wheel torque may depend on a powertrain type of the vehicle. Further, in embodiments, a road slope angle may be estimated from coordinates and elevation measured by a Global Navigation Satellite System (GNSS) and/or an adequate vehicle sensor, for example an accelerometer.

In step S4, new state variables are predicted based on previous state variables and on previous input variables. The new state variables may be state variables at a predetermined time $T+\Delta T$, corresponding to an iteration step $k+1$, that are predicted based on previous state variables and previous input variables at a predetermined time T, corresponding to the previous iteration step $k$.

In embodiments, a new vehicle speed and new MRL energy terms are predicted. The predicted vehicle speed may be calculated from longitudinal dynamics of the vehicle (see e.g. Equation 1) and the predicted MRL energy terms may be calculated from integral terms related to previously measured input variables (see Equations 8-10). Further, in step S4; output variables of the system are calculated based on previous state variables. As an example, the output state variables may comprise the predicted speed of the vehicle (which is already calculated because it is comprised in the state variables) and the predicted energy consumption of the vehicle. The predicted energy consumption of the vehicle may advantageously be calculated as a linear combination of predicted MRL relative energy contributions weighted by the corresponding predicted MRL parameters (see Equation 7).

In step S5, a new state covariance matrix P is predicted based on previous state variables. The prediction of the covariance matrix may be performed according to generic Kalman filter equations that are well known to the skilled person, in particular Extended Kalman filtering equations (see, e.g., [REF2]).

In step S6, actual output variables are measured and/or derived from measurements. In embodiments, the actual output variables may comprise an actual vehicle speed, $v_{sns}$ , and an actual overall energy consumption, $E_{virt\text{-}sns}$.

The actual vehicle speed may be derived from a measurement of the angular velocity of a wheel of the vehicle and from a known radius of such wheel. The actual overall energy consumption of the vehicle may be derived from a measurement of a wheel torque, a vehicle speed and from a known radius of such wheel (see Equation 2). When the actual energy consumption of the vehicle is not measured directly from a sensor but calculated indirectly based, for example, on measurements of a torque and a speed, such actual energy consumption may be referred to as a virtual energy consumption measured by a virtual energy sensor.

In step S7, the state variables and the covariance matrix are updated based on a predicted output error between the predicted output variables and the actual output variables. The updating of the state variables and covariance matrix may be performed with generic extended Kalman filtering equations known from the skilled person, in particular extended Kalman filtering equations (see, e.g., [REF2]).

In step S8, it is determined if the trip of the vehicle is over or is still ongoing (i.e. not over). If it is determined that the trip is over, then the process is terminated. If it is determined that the trip is ongoing, it is proceeded to a further iteration of the method, for example starting with step S3, using the updated state variables obtained from step S7. As long as it is determined that the trip is ongoing, the steps S3 to S8 are processed again iteratively, until it is determined that the trip is not ongoing.

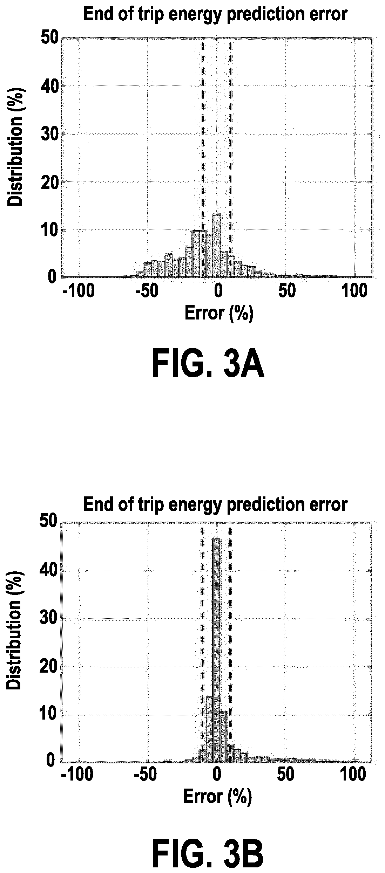

As can be seen in FIG. 3, the entire trip consumption predicted with the MRL estimator method according to the present disclosure (FIG. 3A) is improved compared to the entire trip consumption predicted with the methods of the prior art (FIG. 3B). In particular, the use of the virtual energy consumption in addition to the vehicle speed to correct the state variables in the Kalman filtering process improves the accuracy of the prediction of the state variables compared to a process in which only the vehicle speed is used.

The methods and systems according to the present description provide an improved estimation of MRL parameters that can be useful for a variety of applications, such as:

- estimation of a vehicle energy consumption for a given itinerary, given a specified vehicle speed trace;
- estimation of the vehicle driving range in km, obtained from the predicted cumulative energy consumption, in combination with an energy management model;
- optimization of hybrid powertrain energy management strategy to minimize fuel consumption on a pre-defined trip. For example, selection of the most economical trip amongst several GPS itineraries, optimization of a battery state-of-charge (SOC) related to geofencing application (e.g. in order to avoid driving with an internal combustion engine in the city centre), and computation of fleet average fuel consumption and CO2, based on connected big data, related to On-Board Fuel Consumption Monitoring (OBFCM) requirements;

- computation of fleet average fuel consumption and CO2, based on connected big data, related to OBFCM requirements;
- detection of over-loaded vehicle followed by a warning message to the driver for safety purpose;
- detection of large aerodynamic drag (caused, for example, by the presence of a roof box, bike rack, trailer, or any apparatus affixed to the vehicle), followed by a warning message to the driver about a fuel consumption increase (or driving range reduction) to be expected as a result; and

- predictive maintenance such as tire wear to inform customers and/or vehicle fleet managers about tire check or replacement.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense

**Claims**

1. A computer-implemented method for estimating a vehicle mass and/or road load parameters during a vehicle trip based on an iterative estimator, the method comprising steps of:

   - providing a dynamical model of the vehicle, wherein a dynamical state of the vehicle is **characterized by** state variables comprising at least a speed of the vehicle and mass and road load parameters of the vehicle, at least one of the state variables having a dynamical evolution depending on input variables;
   - (S3) measuring the input variables;
   - (S4) based on the state variables and the measured input variables at a previous time, calculating predicted state variables and predicted output variables at a future predetermined time, the predicted output variables comprising at least a speed of the vehicle and an energy consumption of the vehicle;
   - (S5) based on the state variables and the measured input variables at the previous time, calculating a predicted covariance of the state variables at the future predetermined time;
   - (S6) determining actual output variables corresponding to the predicted output variables, the actual output variables comprising at least an actual speed of the vehicle ($v_{sns}$) and an actual energy consumption of the vehicle ($E_{virt\text{-}sns}$);
   - (S7) calculating a predicted output error between the predicted output variables and the actual output variables, and, based on the predicted output error and the predicted covariance of the state variables, correcting the state variables.

2. The method of claim 1, wherein the input variables comprise an angular velocity ($\omega_{wheel}$) of at least one wheel of the vehicle and a traction torque ($T_{wheel}$) of the at least one wheel, and wherein the actual energy consumption of the vehicle is calculated based on previous measurements of such angular velocity ($\omega_{wheel}$) and such traction torque ($T_{wheel}$).

3. The method of claim 1 or 2, wherein the state variables further comprise mass and road load energy terms ($\varepsilon_{mass}$, $\varepsilon_{roll}$, $\varepsilon_{drag}$) representative of relative energy contributions of the forces related to the mass and road load parameters ($m$, $A_{roll}$, $C_{drag}$) to energy consumption of the vehicle ($E$).

4. The method of claim 3, wherein the mass and road load energy terms ($\varepsilon_{mass}$, $\varepsilon_{roll}$, $\varepsilon_{drag}$) are calculated, at each iteration, based on at least one input variable measured since the start of the trip and a time elapsed since the start of the trip.

5. The method of claim 3 or 4, wherein the mass and road load energy terms ($\varepsilon_{mass}$, $\varepsilon_{roll}$, $\varepsilon_{drag}$) comprise a rolling resistance energy term ($\varepsilon_{roll}$) representative of a rolling resistance exerted by the road on the vehicle, and wherein a predicted rolling resistance energy term is calculated based on the speed of the vehicle at previous times and a time elapsed since the start of the trip.

6. The method of any of claims 3 to 5, wherein the mass and road load energy terms ($\varepsilon_{mass}$, $\varepsilon_{roll}$, $\varepsilon_{drag}$) comprise a drag energy term ($\varepsilon_{drag}$) representative of an aerodynamic drag force exerted by surroundings of the vehicle on the vehicle, and wherein a predicted drag energy term is calculated based on a cubic speed of the vehicle measured at previous times and a time elapsed since the start of the trip.

7. The method of any of claims 3 to 6, wherein the mass and road load energy terms ($\varepsilon_{mass}$, $\varepsilon_{roll}$, $\varepsilon_{drag}$) comprise a mass energy term ($\varepsilon_{mass}$) representative of a road grade force exerted by a gravitational field on the vehicle, and wherein a predicted mass energy term is calculated based on a square speed of the vehicle and a road grade angle at previous times and a time elapsed since the start of the trip.

8. The method of any of claims 3 to 7, wherein the predicted energy consumption (E) of the vehicle is calculated as a linear combination of predicted mass and road load energy terms ($\varepsilon_{mass}$, $\varepsilon_{roll}$, $\varepsilon_{drag}$) weighted by corresponding predicted mass and road load parameters ($m$, $A_{roll}$, $C_{drag}$).

9. The method of any of claims 3 to 8, further comprising a step of:

   - (S2) before proceeding to the step of (S3) measuring input variables, setting mass and road load energy terms to predetermined initial values equal to zero.

10. The method of any of claims 1 to 9, further comprising a step of:

    - (S8) determining if a trip of the vehicle is ongoing and, if it is determined that a trip of the vehicle is ongoing, proceeding to a further iteration of the method.

11. The method of any of claims 1 to 10, further comprising a step of:

    - (S1) setting initial mass and road load parameters to predetermined initial values, for example production values.

12. The method of any of claims 1 to 11, further comprising a step of:

    - using the state variables to control the vehicle, wherein controlling the vehicle comprises adjusting actuators of the vehicle to minimize fuel and/or energy consumption in view of a predetermined trip.

13. The method of any of claims 1 to 12, further comprising:

    - using the state variables to estimate a remaining driving range of the vehicle and transmit information regarding the remaining driving range to a user of the vehicle.

14. A computer program including instructions for executing the steps of the method of any of claims 1 to 13, when said program is executed by a computer.

15. A recording medium readable by a computer and having recorded thereon a computer program including instructions for executing the steps of the method of any of claims 1 to 13.

Predict                Correct

$T_{wheel}(t)$
$\theta(t)$

$v, m,$
$A_{roll}, C_{drag},$
$\varepsilon_{roll}, \varepsilon_{drag}, \varepsilon_{mass}$
states(x)

$v(t)$
$E(t)$

$v_{sns}$
$E_{virt-sns}$

input (u)                output (y)

update mass & road load

# FIG. 1

**Start**

Set initial mass and road load
parameters to initial values — S1

Set mass and road load energy
terms to zero — S2

Measure input
variables — S3

Calculate predicted output
variables and predicted state
variables — S4

Correct the state variables based on
a calculated output error between
the predicted output variables and
the actual output variables — S7

Calculate predicted covariance
of state variables — S5

Determine actual
output variables — S6

Is the
trip
over ? — S8

No

Yes

**End**

# FIG. 2

**End of trip energy prediction error**

FIG. 3A

**End of trip energy prediction error**

FIG. 3B

Europäisches
Patentamt

European
Patent Office

Office européen
des brevets

## EUROPEAN SEARCH REPORT

Application Number

EP 22 30 6789

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 03/016837 A1 (VOLVO LASTVAGNAR AB [SE]; LINGMAN PETER [SE]; SCHMIDTBAUER BENGT [SE]) 27 February 2003 (2003-02-27) <br> * claims 1-23 * <br> * page 4, line 16 - page 5, line 8 * <br> ----- | 1-15 | INV. <br> B60W40/076 <br> B60W40/13 <br> B60T8/172 |
| A | WO 2015/004639 A2 (FIAT RICERCHE [IT]) 15 January 2015 (2015-01-15) <br> * figures 1-3 * <br> * page 9, line 26 - page 12, line 13 * <br> ----- | 1-15 | |
| A | US 5 434 780 A (KUME MASAYUKI [JP] ET AL) 18 July 1995 (1995-07-18) <br> * column 5, line 7 - line 42 * <br> * figures 1-5 * <br> ----- | 1-15 | |

**TECHNICAL FIELDS
SEARCHED      (IPC)**

B60W
B60T

The present search report has been drawn up for all claims

| Place of search | Date of completion of the search | Examiner |
|---|---|---|
| Munich | 19 April 2023 | Mennerun, Steeve |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 30 6789

This annex lists the patent family members relating to the patent documents cited in the above-mentioned European search report.
The members are as contained in the European Patent Office EDP file on
The European Patent Office is in no way liable for these particulars which are merely given for the purpose of information.

19-04-2023

| Patent document cited in search report | | Publication date | Patent family member(s) | | Publication date |
|---|---|---|---|---|---|
| WO 03016837 | A1 | 27-02-2003 | BR | 0211828 A | 08-09-2004 |
| | | | EP | 1425559 A1 | 09-06-2004 |
| | | | JP | 4583028 B2 | 17-11-2010 |
| | | | JP | 2005500525 A | 06-01-2005 |
| | | | US | 2004167705 A1 | 26-08-2004 |
| | | | WO | 03016837 A1 | 27-02-2003 |
| WO 2015004639 | A2 | 15-01-2015 | BR | 112015032745 A2 | 25-07-2017 |
| | | | EP | 3019379 A2 | 18-05-2016 |
| | | | US | 2016332633 A1 | 17-11-2016 |
| | | | WO | 2015004639 A2 | 15-01-2015 |
| US 5434780 | A | 18-07-1995 | JP | H0694116 A | 05-04-1994 |
| | | | US | 5434780 A | 18-07-1995 |
| | | | US | 5598336 A | 28-01-1997 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LINGMAN, PETER ; SCHMIDTBAUER, BENGT.** Road slope and vehicle mass estimation using Kalman filtering. *Vehicle System Dynamics,* 2002, vol. 37, 12-23
- **EL GAOUTI ; YOUSSEF, COLIN ; GUILLAUME, THIAM, B. et al.** Online vehicle aerodynamic drag observer with Kalman filters. *IFAC-PapersOnLine,* 2021, vol. 54 (2), 51-56

- **REINA, GIULIO ; PAIANO, MATILDE ; BLANCO-CLARACO, JOSE-LUIS.** Vehicle parameter estimation using a model-based estimator. *Mechanical Systems and Signal Processing,* 2017, vol. 87, 227-241
- Estimation of road grade and vehicle mass via model predictive control. **WINSTEAD, VINCENT ; KOLMANOVSKY, ILYA V.** Proceedings of 2005 IEEE Conference on Control Applications. IEEE, 2005, 1588-1593